# EUROPÄISCHE PATENTSCHRIFT

(11) **EP 3 252 361 B1**
(45) Veröffentlichungstag und Bekanntmachung des Hinweises auf die Patenterteilung: **09.01.2019**
(21) Anmeldenummer: 17166034.3
(22) Anmeldetag: 11.04.2017
(51) Int. Cl.: F16K 39/02

(54) **RÜCKLAUFBAUGRUPPE MIT EINEM SCHWIMMENDEN RÜCKLAUFVENTIL UND ELEKTROMAGNETISCHER ANSTEUERUNG**
RETURN ASSEMBLY WITH A FLOATING RETURN VALVE AND ELECTROMAGNETIC CONTROL
MODULE RETOUR COMPRENANT UN CLAPET ANTI-RETOUR À FLOTTEUR ET COMMANDE ÉLECTROMAGNÉTIQUE

(30) Priorität: 03.06.2016 DE 102016110324
(43) Veröffentlichungstag der Anmeldung: 06.12.2017
(73) Patentinhaber: Intercable GmbH, 39031 Bruneck (IT)
(72) Erfinder: Weger, Dietmar, 39030 Terenten (IT)
(74) Vertreter: KNH Patentanwälte Neumann Heine Taruttis PartG mbB

(56) Entgegenhaltungen:
- EP-A1- 2 333 335
- CN-A- 101 975 300
- GB-A- 1 427 214
- US-A- 4 982 803
- US-A1- 2008 082 242

## Beschreibung

### Technisches Gebiet

Die Erfindung bezieht sich auf eine Rücklaufbaugruppe mit einem schwimmenden Rücklaufventil und elektromagnetischer Ansteuerung. Derartige Ventile werden in verschiedensten Bereichen eingesetzt. So zum Beispiel auch bei Pumpengruppen für hydraulische Werkzeuge.

Mittels eines Rücklaufventils kann Druck aus einem Bereich abgelassen und das Druckmedium bzw. die Hydraulikflüssigkeit aus diesem Bereich hinausgeleitet werden. Bei hydraulischen Werkzeugen beispielsweise kann ein mit einem Arbeitsdruck beaufschlagter Arbeitszylinder des Werkzeugs über ein Rücklaufventil entlastet und die Hydraulikflüssigkeit in einen Tank zurückgeführt werden. Besonders bei Klemm-, Schneid- und vergleichbaren hydraulischen Werkzeugen, müssen teilweise enorme Drücke im Bereich von bis zu 1000 bar aufgebaut werden, um die erforderlichen Klemm- bzw. Schneidkräfte am Werkzeugkopf aufzubauen. Dazu werden ein oder mehrere Arbeitszylinder durch Pumpengruppen mit hydraulischem Medium (z. B. Öl) unter Druck gesetzt, sodass ein oder mehrere Arbeitskolben in den Arbeitszylindern einen Arbeitshub vollziehen. Nachdem eine Endstellung des Arbeitshubs erreicht ist, muss der Druck aus dem Arbeitszylinder abgelassen werden, damit der Arbeitskolben wieder zurück in seine Ausgangsstellung verfahren kann. Diese Rückholbewegung wird durch ein Rückstellelement wie beispielsweise eine Druckfeder bewirkt.

Um bei dem Ablassen des Drucks nicht das Hydraulikmedium zu verlieren, werden Rücklaufventile eingesetzt, die das Hydraulikmedium aus dem Arbeitszylinder in einen Tank ablassen. Aus diesem Tank kann dann die Pumpeneinheit das Medium erneut zur Beaufschlagung des Arbeitszylinders nutzen.

### Stand der Technik

Es ist beispielsweise aus der EP 2 333 335 A bekannt, schwimmende Rücklaufventile für hydraulische Werkzeuge einzusetzen. Der Vorteil schwimmender Rücklaufventile liegt in der deutlich reduzierten Kraft, die zum Öffnen des Ventils gegen den anliegenden Arbeitsdruck aus dem Arbeitszylinder notwendig ist. Um ein Zurückfahren des Arbeitskolbens zu bewirken, werden schwimmende Rücklaufventile verwendet, die manuell und/oder automatisch durch einen Servomotor geöffnet werden können.

Die automatische Betätigung von schwimmenden Rücklaufventilen mittels Servomotoren weist einige Nachteile auf. Zum einen sind für die Ansteuerung des Rücklaufventils durch den Servomotor viele mechanische Bauteile wie Exzenterscheiben, Wälzlager, etc. notwendig. Diese Bauteile müssen zudem alle mit einer hohen Genauigkeit gefertigt werden, um eine präzise Ansteuerung und somit ein fehlerfreies Öffnen und dichtes Schließen des Rücklaufventils zu gewehrleisten. Dies erhöht die Zeit, die für die Fertigung und Montage benötigt wird und somit auch die Herstellungskosten. Zudem kommt es bei einem Werkzeug mit einem Rücklaufventil, das über einen Servomotor angesteuert wird, bei einem Ausfall des Servomotors zu einem Totalausfall des Geräts, da der Servomotor grundsätzlich im betätigten Zustand ausfällt (Ventil geöffnet). Weiterhin erfolgt die Ansteuerung mittels eines Servomotors langsam und verzögert, sodass die Zeit für einen kompletten Arbeitsvorgang mit dem hydraulischen Werkzeug ebenfalls lang ist. Überdies werden Servomotoren durch Taktsignale angesteuert und geregelt. Dabei wird der Servomotor über ein Taktsignal positionsbezogen angesteuert, wobei die Breite des Taktsignals den Rechts- oder Linkslauf des Servomotors bestimmt. Ferner sind für eine maximale Öffnung, also eine maximale Rotation des Servomotors die Taktsignale so zu wählen, dass immer die maximale Leistung an dem Servomotor anliegt. Daher ist das Offenhalten eines Rücklaufventils mittels eines Servomotors mit einem hohen Energieverbrauch verbunden. Schließlich sind Servomotoren nur in einem Bereich von -20 °C [Grad Celsius] bis 60 °C [Grad Celsius] einsetzbar. Gerade in besonders kalten Gegenden oder in besonders heißen Anlagen kann es daher zum Ausfall von hydraulischen Werkzeugen mit einem Rücklaufventil, das über einen Servomotor angesteuert ist, kommen.

Eine andere Rücklaufbaugruppe ist aus der GB 1 427 214 bekannt.

Die Aufgabe der vorliegenden Erfindung besteht daher darin, ein schwimmendes Rücklaufventil bereitzustellen, das wenige mechanische Bauteile benötigt, schnell auslöst, verschleißarm ist, eine hohe Lebensdauer aufweist, möglichst wenig Energie verbraucht und in einem großen Temperaturbereich einsetzbar ist.

### Darstellung der Erfindung

Die Aufgabe wird durch eine Rücklaufbaugruppe gemäß Patentanspruch 1 sowie durch ein erfindungsgemäßes hydraulisches Werkzeug gemäß dem nebengeordneten Patentanspruch gelöst. Vorteilhafte Ausführungsformen und Weiterbildungen der Erfindung sind Gegenstand der untergeordneten Patentansprüche.

Eine erfindungsgemäße Rücklaufbaugruppe umfasst ein schwimmendes Rücklaufventil. Das schwimmende Rücklaufventil umfasst einen Ventilkörper einschließlich einer Ventilbohrung, in der nacheinander eine Druckkammer, eine Rücklaufkammer und eine Ausgleichskammer ausgebildet sind. Ferner umfasst das schwimmende Rücklaufventil einen Stößel, der in der Ventilbohrung angeordnet ist, und einen Verschlusskörper, der die Druckkammer von der Rücklaufkammer dicht abtrennt, wenn er an einem Ventilsitz anliegt. Dabei liegt in der Druckkammer und in der Ausgleichskammer ein Arbeitsdruck p_{A} an. Der Arbeitsdruck p_{A} drückt in der Druckkammer den Verschlusskörper gegen den Ventilsitz und in der Ausgleichskammer den Stößel in entgegengesetzter Richtung. Weiterhin umfasst das schwimmende Rücklaufventil ein Vorspannelement, das den Verschlusskörper gegen den Ventilsitz vorspannt. Die erfindungsgemäße Rücklaufbaugruppe umfasst ferner einen Aktuator, der den Stößel in eine Richtung auf den Verschlusskörper zu verschieben kann. Dabei verschiebt der Aktuator über den Stößel den Verschlusskörper gegen eine Vorspannung des Vorspannelements von dem Ventilsitz weg, sodass die Druckkammer nicht von der Rücklaufkammer getrennt ist und der Arbeitsdruck (p_{A}) aus der Druckkammer in die Rücklaufkammer entweichen kann. Der Aktuator ist ein elektromagnetischer Aktuator einschließlich eines Elektromagneten und eines Ankers, wobei der Anker von dem Elektromagneten bewegt wird und über den Stößel den Verschlusskörper gegen die Vorspannung des Vorspannelements von dem Ventilsitz weg verschiebt, wenn dem Elektromagneten eine ausreichende elektrische Leistung zum Öffnen (P_{O}) bereitgestellt wird.

Bei dem schwimmenden Rücklaufventil kann eine Kraft F_{O}, die zum Öffnen des Rücklaufventils aufgebracht werden muss, durch den elektromagnetischen Aktuator aufgebracht werden. Wenn sich der Verschlusskörper in seiner Ruhelage am Ventilsitz befindet, wirkt eine Kraft F_{O} auf diesen, die sich aus einer Vorspannkraft F_{V} des Vorspannelements, einer Anpresskraft F_{P} resultierend aus dem Arbeitsdruck p_{A} in der Druckkammer und einer Reibungskraft F_{R} (in Ruhelage: Haftkraft) zusammensetzt. Um das schwimmende Rücklaufventil zu öffnen muss der elektromagnetische Aktuator eine Kraft F_{M} generieren, die größer als die Kraft F_{O} ist. Sobald der Verschlusskörper von dem Ventilsitz durch den elektromagnetischen Aktuator über den Stößel abgehoben wird, beginnt ein Druckausgleich, wobei der Arbeitsdruck p_{A} in die Rücklaufkammer entweichen kann.

Der elektromagnetische Aktuator kann den Stößel direkt in einer parallelen Bewegung durch den Anker verschieben.

Ab einer gewissen Verschiebung a, also einem gewissen Öffnungsgrad des Verschlusskörpers fällt der Arbeitsdruck p_{A} in der Druckkammer rapide unter einen gewissen Grenzdruck p_{G}. Infolgedessen verschwindet die Anpresskraft F_{P} nahezu vollständig. Danach ist die Kraft F_{O} im Wesentlichen nur noch von der Reibungskraft F_{R} und der Vorspannkraft F_{V} bestimmt. Die Vorspannkraft F_{V} kann mit der weiteren Verschiebung des Verschlusskörpers wieder ansteigen. Dementsprechend kann auch die Kraft zum Öffnen F_{O} auf den Verschlusskörper bzw. die aufzubringende Kraft F_{M} durch den elektromagnetischen Aktuator mit zunehmender Verschiebung des Verschlusskörpers wieder ansteigen. Dieser Verlauf der Vorspannkraft F_{V} kann durch ein Vorspannelement wie beispielsweise eine Druckfeder hervorgerufen werden. Sobald der Verschlusskörper einen Anschlag b erreicht, steigt die Kraft zum Öffnen F_{O} bzw. die aufzubringende Kraft F_{M} stark an. Der Anschlag kann durch ein Anschlagelement, ein Aufliegen der einzelnen Wendel eines als Druckfeder ausgestalteten Vorspannelements oder in sonstiger bekannter Weise gebildet werden.

Der elektromagnetische Aktuator benötigt im Gegensatz zu den bekannten Servomotoren keine Wälzlager und keine Exzenterscheibe, so dass er mit weniger mechanischen Bauteilen aus kommt. Ferner sinken die Herstellungskosten im verglich zum bekannten Stand der Technik, da weniger Bauteile mit geringer Toleranz gefertigt und montiert werden müssen. Zudem weist der elektromagnetische Aktuator ein schnelleres Ansprechverhalten als ein Servomotor auf, was zu einer schnelleren Rücklaufzeit für Hydraulikflüssigkeit beispielsweise aus einem Arbeitszylinder eines hydraulischen Werkzeugs führt. Außerdem führt ein Ausfall des elektromagnetischen Aktuators nicht zu einem Totalausfall der Rücklaufbaugruppe, da der elektromagnetische Aktuator im Gegensatz zu einem Servomotor nicht im betätigten (geöffneten) Zustand ausfällt und in diesem verbleibt.

In einer Weiterbildung kann die Rücklaufbaugruppe eine Energiequelle umfassen, die eingerichtet ist dem Elektromagnet eine Leistung P bereitzustellen. Ferner kann die Rücklaufbaugruppe eine Steuerung umfassen, die eingerichtet ist die Leistung P von der Leistung zum anfänglichen Öffnen P_{O} auf eine Leistung zum weiteren Öffnen oder Offenhalten P_{H} zu reduzieren, sobald der Arbeitsdruck p_{A} in der Druckkammer unter einen Grenzdruck p_{G} abgefallen ist.

Ab dem Erreichen der Verschiebung a ist eine wesentlich geringere Kraft F_{O} zum weiteren Öffnen des schwimmenden Rücklaufventils aufgrund des unter den Grenzdruck p_{G} gefallenen Drucks in der Druckkammer nötig. Daher kann die Leistung P, die dem Elektromagnet des elektromagnetischen Aktuators zugeführt wird, von einer Leistung P_{O}, die zum anfänglichen Öffnen des schwimmenden Ventils notwendig ist, auf eine deutlich geringere Leistung reduziert werden, die zum weiteren Öffnen des Rücklaufventils ausreicht. Die Kraft F_{V}, die von dem Vorspannelement auf den Verschlusskörper ausgeübt wird, kann mit fortschreitender Verschiebung des Verschlusskörpers von dem Ventilsitz weg zunehmen, beispielsweise wenn das Vorspannelement durch eine Druckfeder gebildet wird. Somit kann die Kraft zum weiteren Öffnen des schwimmenden Rücklaufventils mit der fortscheitenden Verschiebung des Verschlusskörpers von dem Ventilsitz weg ansteigen. Dementsprechend kann auch eine Erhöhung der Leistung P, die dem Elektromagneten bereitgestellt wird, notwendig sein. Sobald der Anschlag bei der Verschiebung b erreicht wird, kann die Kraft F_{H} nötig sein, um das schwimmende Ventil offen zu halten. Diese Kraft F_{H} zum Offenhalten kann je nach Art des Vorspannelements genau so groß sein, wie die Kraft zum weiteren Öffnen, die nach dem Druckabfall unter den Grenzdruck p_{G} in der Druckkammer nötig ist, oder wie die Kraft zum Öffnen kurz vor dem Erreichen des Anschlags bei der Verschiebung b. Alternativ kann auch für eine besonders einfache Implementierung der Steuerung die Leistung P nach dem Erreichen der Verschiebung a direkt von der Leistung P_{O} zum anfänglichen Öffnen auf die Leistung P_{H} zum Offenhalten reduziert werden. Die durch die Leistung P_{H} von dem elektromagnetischen Aktuator, bzw. dem Elektromagnet auf den Anker, erzeugte Kraft F_{M} kann daher so groß wie die Kraft zum Offenhalten F_{H} sein. Dabei kann die erzeugte Kraft F_{M} von dem elektromagnetischen Aktuator zunächst bei der Verschiebung a größer als die zum weiteren Öffnen notwendige Kraft sein.

Durch das reduzieren der Leistung kann im Gegensatz zu Systemen mit einem Servomotor, bei dem immer die volle Leistung anliegen muss, signifikant Energie gespart werden, was die Laufzeit von akkubetriebenen hydraulischen Werkzeugen, die solch eine erfindungsgemäße Rücklaufbaugruppe enthalten, deutlich erhöht.

In einer weiteren Ausgestaltung der Rücklaufbaugruppe kann die Steuerung eingerichtet sein die Leistung P durch Puls-Weiten-Modulation (PWM) einzustellen.

Bei der PWM wird die Leistung P eingestellt, in dem die Pulsweite von Rechteckpulsen einer gleichbleibenden Frequenz verändert wird. Während eines Rechteckpulses liegt die maximale Spannung an, die von der Stromquelle bereitgestellt werden kann. Während kein Rechteckpuls vorliegt, liegt auch keine Spannung an. Somit kann über die Pulsweite der Wert einer mittleren Spannung U_{M} und damit die Leistung P gesteuert werden. Ein Strom der von der Energiequelle bereitgestellt wird, hängt von dem Verbraucher, hier dem elektromagnetischen Aktuator ab und ist im Wesentlichen konstant während der PWM.

Die PWM bietet somit eine aufwandsarme Möglichkeit, die Leistung P für den elektromagnetischen Aktuator bereitzustellen.

In einer weiteren Ausgestaltung der Rücklaufbaugruppe kann die Steuerung eingerichtet sein, einen Strom I_{M} durch den Elektromagnet zu erfassen und als Regelgröße für die Leistung P zu verwenden.

Der Strom I_{M} durch den Elektromagnet hängt von der Verschiebung des Ankers und somit auch von der Kraft F_{M} ab. Sobald die Verschiebung a erreicht wird, sinkt wie zuvor beschrieben die nötige Kraft, um den Verschlusskörper weiter zu verschieben, also das schwimmende Rücklaufventil zu öffnen. Dieser Kraftabfall korreliert mit einem Abfall in dem Strom I_{M} durch den Elektromagneten. Dieser Stromabfall kann von der Steuerung bei der Beobachtung des Verlaufs des Stroms I_{M} (Messung des Stroms I_{M}) erfasst werden. Demnach kann der Stromabfall bei der Verschiebung a von der Steuerung als Signal benutzt werden, um die Leistung P von der Leistung L_{O} zum anfänglichen Öffnen auf die Leistung zum weiteren Öffnen bzw. zum Offenhalten F_{H} zu reduzieren.

Die Nutzung des Stromverlaufs zur Steuerung der Leistung hat den Vorteil, dass auf teure zusätzliche Sensoren verzichtet werden kann und somit die Kosten gesenkt werden können.

In einer weiteren Ausgestaltung der Rücklaufbaugruppe kann eine Steuerung eingerichtet sein, den erfassten Strom I_{M} für eine Erkennung eines Anschlags des Verschlusskörpers zu verwenden.

Sobald der Anschlag bei der Verschiebung b erreicht wird, steigt die Kraft zum weiteren Verschieben des Verschlusskörpers und damit des Ankers stark an. Dies zeigt sich in einem Anstieg des Stroms I_{M}, so dass dieser Stromanstieg als Signal für das Erreichen des Anschlags bzw. der Verschiebung b und somit der maximalen Öffnungsstellung des schwimmenden Rücklaufventils genutzt werden kann.

Durch das Erkennen des Erreichens des Anschlags bzw. der maximalen Öffnungsstellung kann die Funktionstüchtigkeit der Rücklaufbaugruppe überprüft werden, indem beispielsweise eine Fehlermeldung erfolgt, falls der Anschlag nicht nach einer gewissen vorgegebenen Zeit erreicht wird. Damit kann die Zuverlässigkeit von Rücklaufbaugruppen und hydraulischen Werkzeugen, die diese verwenden, erhöht werden.

In einer weiteren Ausgestaltung der Rücklaufbaugruppe kann der elektromagnetische Aktuator derart eingerichtet sein, dass der Anker manuell bewegt werden kann.

Über eine Fläche des Ankers auf einer Außenseite des elektromagnetischen Aktuators, kann eine manuelle Betätigung erfolgen, ohne dass der Aktuator bestromt werden muss. Das schwimmende Rücklaufventil kann somit immer auch manuell geöffnet werden.

Selbst bei einem Ausfall des Elektromagneten (z. B. leerer Akku), bleibt demnach die Rücklaufbaugruppe bzw. ein hydraulisches Werkzeug mit solch einer Rücklaufbaugruppe funktionstüchtig und kann weiter benutzt werden.

Der Stößel umfasst einen ersten Kolbenabschnitt, einen zweiten Kolbenabschnitt und eine Spitze. Der Stößel kann dabei derart geformt sein, dass auf den Stößel durch den Arbeitsdruck p_{A} in der Ausgleichskammer eine Kraft F_{A} wirkt, die kleiner oder gleich der Kraft F_{P} ist, die durch den Arbeitsdruck p_{A} in der Druckkammer auf den Verschlusskörper wirkt, und dieser entgegengesetzt gerichtet ist.

Die Kraft F_{A}, die auf den Stößel durch den Druck P_{A} in der Ausgleichskammer entgegen der Kraft F_{P} auf den Verschlusskörper erzeugt wird, hängt von der Fläche des Absatzes bzw. der Schulter ab, der/die an dem Stößel von dem zweiten Kolbenabschnitt und der Spitze gebildet wird. Dabei kann über die Wahl der Größe der Fläche des Absatzes, also über das Durchmesserverhältnis zwischen Spitze und zweitem Kolbenabschnitt, die Größe der Kraft F_{A} eingestellt werden. Dabei kann die Kraft vorteilhaft etwas geringer als die Kraft F_{P} eingestellt werden, so dass insgesamt die Kraft F_{P} auf den Verschlusskörper nicht vollständig durch die Kraft F_{A} über den Stößel kompensiert wird. Somit kann insgesamt eine zusätzliche Kraft zu der Vorspannkraft durch das Vorspannelement auf den Verschlusskörper wirken.

Durch diese nicht vollständige Kompensation der Kraft F_{P} in dem schwimmenden Rücklaufventil kann die Funktionssicherheit gesteigert werden, da selbst wenn das Vorspannelement versagen sollte in Summe immer noch eine Kraft zum Anpressen des Verschlusskörpers auf den Ventilsitz vorliegt.

In einer weiteren Ausgestaltung der Rücklaufbaugruppe kann die Rücklaufbaugruppe in einem Temperaturbereich von -30°C [Grad Celsius] bis + 100°C [Grad Celsius] einsetzbar sein.

Der elektromagnetische Aktuator umfassend den Elektromagneten und den Anker ist im Gegensatz zu Servomotoren in einem wesentlich größeren Temperaturbereich einsetzbar, ohne seine Funktionalität zu verlieren.

Eine solche Rücklaufbaugruppe bzw. ein diese umfassendes hydraulisches Werkzeug kann demnach vielseitiger eingesetzt werden.

In einer weiteren Ausgestaltung der Rücklaufbaugruppe kann die Spitze im Wesentlichen ein Rotationshyperboloidstumpf sein.

Durch die rotationshyperboloidstumpfförmige Ausgestaltung bildet die Spitze mit der Rücklaufkammer im geöffneten Zustand einen strömungsmechanisch besonders günstigen Kanal für die rücklaufende Hydraulikflüssigkeit. Der Widerstand, der der Hydraulikflüssigkeit durch das geöffnete schwimmende Rücklaufventil entgegengesetzt wird, ist somit besonders gering. Umgekehrt ist auch die Kraft der Hydraulikflüssigkeit auf den gebildeten Strömungskanal sehr gering.

Somit kann der Rücklauf besonders schnell vollzogen werden. Ferner werden derartige Rücklaufbaugruppen nicht so schnell durch Verschleiß beeinträchtigt

Ein erfindungsgemäßes hydraulisches Werkzeug umfasst eine Rücklaufbaugruppe. Die Rücklaufbaugruppe umfasst ein schwimmendes Rücklaufventil. Das schwimmende Rücklaufventil umfasst einen Ventilkörper einschließlich einer Ventilbohrung, in der nacheinander eine Druckkammer, eine Rücklaufkammer und eine Ausgleichskammer ausgebildet sind. Ferner umfasst das schwimmende Rücklaufventil einen Stößel, der in der Ventilbohrung angeordnet ist, und einen Verschlusskörper, der die Druckkammer von der Rücklaufkammer dicht abtrennt, wenn er an einem Ventilsitz anliegt. Dabei liegt in der Druckkammer und in der Ausgleichskammer ein Arbeitsdruck p_{A} an. Der Arbeitsdruck p_{A} drückt in der Druckkammer den Verschlusskörper gegen den Ventilsitz und in der Ausgleichskammer den Stößel in entgegengesetzter Richtung. Weiterhin umfasst das schwimmende Rücklaufventil ein Vorspannelement, das den Verschlusskörper gegen den Ventilsitz vorspannt. Die Rücklaufbaugruppe umfasst ferner einen Aktuator, der den Stößel in eine Richtung auf den Verschlusskörper zu verschieben kann. Dabei verschiebt der Aktuator über den Stößel den Verschlusskörper gegen eine Vorspannung des Vorspannelements von dem Ventilsitz weg, sodass die Druckkammer nicht von der Rücklaufkammer getrennt ist und der Arbeitsdruck p_{A} aus der Druckkammer in die Rücklaufkammer entweichen kann. Dabei ist ein Arbeitszylinder des Werkzeugs über eine dritte Fluidleitung mit der Druckkammer und über eine erste Fluidleitung mit der Ausgleichskammer verbunden. Ferner ist ein Tank des hydraulischen Werkzeugs über eine zweite Fluidleitung mit der Rücklaufkammer verbunden. Der Aktuator ist ein elektromagnetischer Aktuator einschließlich eines Elektromagneten und eines Ankers, wobei der Anker von dem Elektromagneten bewegt wird und über den Stößel den Verschlusskörper gegen die Vorspannung des Vorspannelements von dem Ventilsitz weg verschiebt, wenn dem Elektromagneten eine ausreichende elektrische Leistung zum Öffnen P_{O} bereitgestellt wird.

Das Hydraulische Werkzeug kann dabei eine Rücklaufbaugruppe gemäß den zuvor beschriebenen Ausgestaltungen umfassen.

Die Vorteile die bezüglich der Rücklaufbaugruppe bzw. deren Ausgestaltungen aufgezeigt wurden, treffen auch auf das erfindungsgemäße hydraulische Werkzeug zu.

### Kurze Figurenbeschreibung

Fig. 1 zeigt eine Schnittdarstellung einer erfindungsgemäßen Rücklaufbaugruppe mit elektromagnetischer Ansteuerung im geschlossenen oder Ruhezustand.
Fig. 2 zeigt eine Schnittdarstellung einer erfindungsgemäßen Rücklaufbaugruppe mit elektromagnetischer Ansteuerung im geöffneten oder Arbeitszustand.
Fig. 3 zeigt einen schematischen Kraft-Weg-Verlauf einer erfindungsgemäßen Rücklaufbaugruppe.
Fig. 4 zeigt einen schematischen Leistungs-Weg-Verlauf bzw. Mittlere-Spannung-Weg-Verlauf einer erfindungsgemäßen Rücklaufbaugruppe.

### Ausführliche Beschreibung

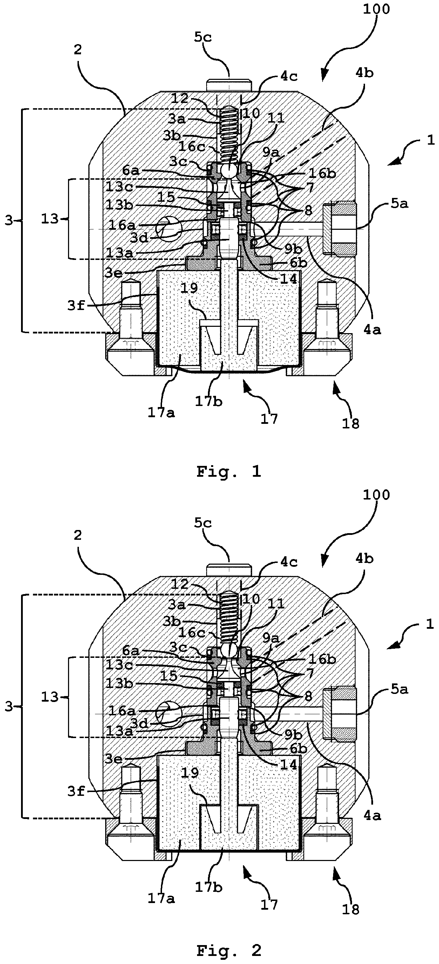

Fig. 1 zeigt eine erfindungsgemäße Rücklaufbaugruppe 100 umfassend ein schwimmendes Rücklaufventil 1 und einen elektromagnetischen Aktuator 17. Die Rücklaufbaugruppe 100 kann in einer Pumpengruppe eines hydraulischen Werkzeugs zum Einsatz kommen. Das Rücklaufventil 1 kann dabei zum Steuern des Rücklaufs von Öl aus einem Arbeitszylinder des Werkzeugs in einen Vorratsbehälter einer Pumpengruppe dienen.

Das Rücklaufventil 1 weist einen Ventilkörper 2 mit einer Ventilbohrung 3 auf. Die Ventilbohrung 3 kann zylindrisch ausgeführt sein und mehrere Abstufungen 3a-3f mit jeweils konstantem Durchmesser aufweisen. Die erste Abstufung 3a kann den geringsten Durchmesser jedoch die größte Tiefe aufweisen. Ferner kann die erste Abstufung 3a durch spanabhebende Verfahren (z. B. Senken) oder direkt beim Urformen (z. B. Gießen) mit optionaler Nachbearbeitung in den Ventilkörper 2 eingebracht werden. Die weiteren Abstufungen 3b-3f können sukzessiv ansteigende Durchmesser und jeweils geringere Tiefen aufweisen. Dabei können die einzelnen weiteren Abstufungen nacheinander durch spanabhebende Verfahren (z. B. Senken) oder direkt beim Urformen (z. B. Gießen) mit optionaler Nachbearbeitung in den Ventilkörper 2 eingebracht werden.

Weiterhin kann das Rücklaufventil 1 mehrere Fluidleitungen 4a-4c aufweisen. Die Fluidleitungen 4a-4c können durch spanabhebende Verfahren (z. B. Bohren) oder direkt beim Urformen (z. B. Gießen) mit optionaler Nachbearbeitung in den Ventilkörper 2 eingebracht werden. Zudem können die Fluidleitungen an einer Außenseite des Ventilkörpers 2 jeweils passende Anschlüsse 5a-5c umfassen. Die Anschlüsse 5a-5c können beispielsweise durch Innengewinde mit stirnseitigen Dichtelementen gebildet werden. Die erste Fluidleitung 4a kann in der vierten Abstufung 3d münden. Die zweite Fluidleitung 4b kann in der dritten Abstufung 3c münden. Die dritte Fluidleitung 4c kann in der zweiten Abstufung 3b münden.

Das Rücklaufventil 1 umfasst ferner einen ersten Ventileinsatz 6a und einen zweiten Ventileinsatz 6b. Die Ventileinsätze 6a-6b können im Wesentlichen zylindrische Rohre sein, die durch spanabhebende Verfahren (z. B. Drehen) gefertigt werden. Der erste Ventileinsatz 6a kann in der dritten Abstufung 3c angeordnet sein, wobei dieser an einem Boden der dritten Abstufung 3c anliegen und in die vierte Abstufung hinaus ragen kann. Der zweite Ventileinsatz 6b kann in der vierten und fünften Abstufung 3d, 3e angeordnet sein, wobei dieser mit einem Kragen mit größerem Durchmesser an einem Boden der fünften Abstufung 3e anliegen und in die vierte Abstufung 3d hineinreichen kann. In der vierten Abstufung 3d kann der zweite Ventileinsatz 6b an dem ersten Ventileinsatz 6a anliegen. Dabei weisen die Ventileinsätze 6a-6b einen äußeren Durchmesser auf, der passgenau zu dem Durchmesser der jeweils aufnehmenden Abstufung 3c-3e ausgeführt ist. Die Ventileinsätze 6a-6b können Nuten 7 mit Dichtungselementen 8 an ihren Außenseiten umfassen, sodass zwischen diesen Außenseiten und Innenseiten der dritten und vierten Abstufung 3c, 3d kein Öl entweichen kann. Weiterhin können die Ventileinsätze 6a-6b Öffnungen 9a-9b aufweisen, durch welche Öl in das Innere der Ventileinsätze 6a-6b strömen kann. Die Öffnungen 9a-9b können durch spanabhebende Verfahren (z. B. Bohren) eingebracht werden.

Das Rücklaufventil 1 weist einen Verschlusskörper 10 auf. Der Verschlusskörper 10 (z. B. eine Kugel) kann in dem ersten Ventileinsatz 6a an einem Ventilsitz 11 in der Nähe des Bodens der dritten Abstufung 3c dichtend anliegen. Ferner kann der Verschlusskörper 10 von dem Ventilsitz in Richtung der zweiten Abstufung 3b wegbewegbar sein.

Das Rücklaufventil 1 umfasst weiterhin ein Vorspannelement 12. Das Vorspannelement 12 (z. B. eine Druckfeder) kann in der ersten Abstufung 3a passgenau angeordnet sein und sich von einem Boden der ersten Abstufung 3a durch die zweite Abstufung 3b hindurch bis zu dem Verschlusskörper 10 in dem ersten Ventileinsatz 6a erstrecken. Dabei kann das Vorspannelement 12 den Verschlusskörper 10 gegen den Ventilsitz 11 vorspannen.

Zudem umfasst das Rücklaufventil 1 einen Stößel 13. Der Stößel 13 ist ein im Wesentlichen zylindrischer Stab umfassend einen ersten Kolbenabschnitt 13a, einen zweiten Kolbenabschnitt 13b und eine Spitze 13c. Der Stößel 13 kann durch spanabhebende Verfahren (z. B. Drehen) gefertigt werden. Der Stößel 13 kann in den Ventileinsätzen 6a-6b angeordnet sein und an dem Verschlusskörper 10 mi der Spitze 13c anliegen. Dabei kann der erste Kolbenabschnitt 13a passgenau in dem zweiten Ventileinsatz 6b geführt sein. Der zweite Kolbenabschnitt 13b kann einen geringeren Durchmesser als der erste Kolbenabschnitt 13a aufweisen. Die Spitze 13c kann im Wesentlichen ein Rotationshyperboloidstumpf sein. Die Spitze 13c kann in dem ersten Ventileinsatz 6a passgenau geführt sein. Ein größter Durchmesser der Spitze 13c kann größer als der Durchmesser des zweiten Kolbenabschnitts 13b sein und auch an der Seite des zweiten Kolbenabschnitts 13b angeordnet sein. An der Stelle an der der erste Kolbenabschnitt 13a in dem zweiten Ventileinsatz 6b geführt wird, kann ein ortsfester Dichtkörper 14 ein Entweichen von Öl zwischen einer Innenfläche des zweiten Ventileinsatzes 6b und einer Außenfläche des ersten Kolbenabschnitts 13a verhindern. Ferner kann ein mit dem Stößel 13 mitgeführter Dichtkörper 15 ein Austreten von Öl zwischen einer Innenfläche des ersten Ventileinsatzes 6a und einer Außenfläche der Spitze 13c verhindern.

Das Rücklaufventil umfasst zudem eine Ausgleichskammer 16a, eine Rücklaufkammer 16b und eine Druckkammer 16c. Dabei bilden im Bereich der vierten Abstufung 3d die Innenfläche des ersten Ventileinsatzes 6a, die Innenfläche des zweiten Ventileinsatzes 6b, eine Außenfläche des zweiten Kolbenabschnitts 13b, eine untere Stirnfläche des ersten Kolbenabschnitts 13a und eine Stirnfläche der Spitze 13c bzw. der mitgeführte Dichtkörper 15 die Ausgleichskammer 16a. Diese kann von der ersten Fluidleitung 4a mittels der zweiten Öffnung 9b mit Druck beaufschlagt werden. Im Bereich der dritten Abstufung 3c können die Innenfläche des ersten Ventileinsatzes 6a und die hyperbolische Fläche der Spitze 13c die Rücklaufkammer 16b bilden. Diese kann von der zweiten Fluidleitung 4b mittels der ersten Öffnung 9a kontaktiert werden. Die erste und zweite Abstufung 3a, 3b sowie der untere Teil des ersten Ventileinsatzes 6a bis zum Ventilsitz 11 können die Druckkammer 16c bilden. Diese kann von der dritten Fluidleitung 4c mit Druck beaufschlagt werden. Dabei trennt der Verschlusskörper 10 die Druckkammer 16c von der Rücklaufkammer 16b, wenn dieser an dem Ventilsitz 11 dicht anliegt.

Bei der Rücklaufbaugruppe 100 ist mit dem Rücklaufventil 1 ein elektromagnetischer Aktuator 17 verbunden. Der elektromagnetische Aktuator 17 weist einen Elektromagneten 17a und einen Anker 17b auf.

Der Elektromagnet 17a kann in der sechsten Abstufung 3f angeordnet sein und an einem Boden der sechsten Abstufung 3f sowie auf einer oberen Stirnseite des zweiten Ventileinsatzes 6b anliegen. Ferner kann der Aktuator 17 durch Halteelemente 18 (z. B. eine verschraubte Ringplatte) an dem Ventilkörper 2 gehalten werden. Der Anker 17b liegt an dem Stößel 13 an einer Stirnseite des ersten Kolbenabschnitts 13a an. Eine nach außen weisende Stirnseite des Ankers 17b kann von Hand gedrückt werden.

Im Betrieb wird in der Ruhelage der Verschlusskörper 10 durch das Vorspannelement 12 dichtend auf den Ventilsitz 11 gedrückt. Je nach Betriebszustand liegt in den Fluidverbindungen 4a und 4c und somit in der Ausgleichskammer 16b und der Druckkammer 16c der gleiche Druck an, der von dem Arbeitszylinder des Werkzeugs herrührt und als Arbeitsdruck p_{A} bezeichnet wird. Das schwimmende Rücklaufventil 1 nutzt das in der EP 2 333 335 B1 offenbarte Prinzip für schwimmende Ventile. Nach diesem Prinzip muss durch den gleichen Druck, nämlich den Arbeitsdruck p_{A}, in der Ausgleichskammer 16a wie in der Druckkammer 16c zum Öffnen des Rücklaufventils 1 lediglich eine Kraft aufgebracht werden, die ungefähr gleich bzw. unwesentlich größer ist als eine Vorspannkraft F_{V} des Vorspannelements 12 sowie die Reibungskräfte zwischen Stößel 13 und den Ventileinsätzen 6a-6b. Denn die Kraft F_{P}, die durch den Arbeitsdruck p_{A} in der Druckkammer 16c auf den Verschlusskörper 10 wirkt, wird durch die Kraft F_{A} auf den Stößel 13 nahezu vollständig kompensiert, die durch den Arbeitsdruck p_{A} hervorgerufen wird, der in der Ausgleichskammer 16a herrscht.

Durch diesen Druckausgleich in dem schwimmenden Rücklaufventil 1 kann ein großer Querschnitt für den Durchfluss des Öls realisiert werden, ohne übermäßig große Öffnungskräfte für den Verschlusskörper 10 des Rücklaufventils 1 in Kauf nehmen zu müssen. Durch den großen Durchfluss kann eine hohe Rückholgeschwindigkeit für einen Arbeitskolben in dem Arbeitszylinder des hydraulischen Werkzeugs realisiert werden.

Ferner bestimmt der Durchmesser des Ventilsitzes 11 die Kraft F_{P} durch den Arbeitsdruck p_{A} in der Druckkammer 16c auf den Verschlusskörper 10. Durch die Wahl der Durchmesser der einzelnen Abschnitte 13a-13c des Stößels 13 kann die Kraft F_{A}, die auf den Stößel 13 durch den Arbeitsdruck p_{A} der in der Ausgleichskammer 16a wirkt, so eingestellt werden, dass die Kraft F_{P} auf den Verschlusskörper 10 nicht vollständig kompensiert wird. Dadurch ergibt sich eine zusätzliche Anpresskraft F_{P}, die der vektoriellen Kräftesumme von F_{P} und F_{A} entspricht. Diese Anpresskraft F_{P} drückt den Verschlusskörper 10 ebenso wie die Vorspannkraft F_{V} auf den Ventilsitz 11. Diese kann somit als zusätzliche Sicherheit für ein dichtes Anliegen des Verschlusskörpers 10 am Ventilsitz 11 dienen.

Um den Verschlusskörper 10 zu verschieben kann eine Reibungskraft F_{R} überwunden werden müssen, die aus verschiedenen Reibungsquellen herrührt.

Die Kraft zum Öffnen F_{O} des Rücklaufventils 1, also die Kraft um den Verschlusskörper 10 aus dem Ventilsitz 11 abzuheben kann demnach gleich der Summe aus Vorspannkraft F_{V} des Vorspannelements 12, der Anpresskraft F_{P} und der Reibungskraft F_{R} sein.

Da die Kraft zum Öffnen F_{O} des Rücklaufventils 1, also die Kraft zum Verschieben des Verschlusskörpers 10 aus dem dichten Ventilsitz 11, vergleichsweise gering ist, kann der elektromagnetische Aktuator 17 diese Kraft problemlos aufbringen.

Eine Kraft F_{M} des elektromagnetischen Aktuators, die auf den Stößel 13 wirkt, kann über die Leistung P, die dem Elektromagneten 17a zugeführt wird, geregelt werden.

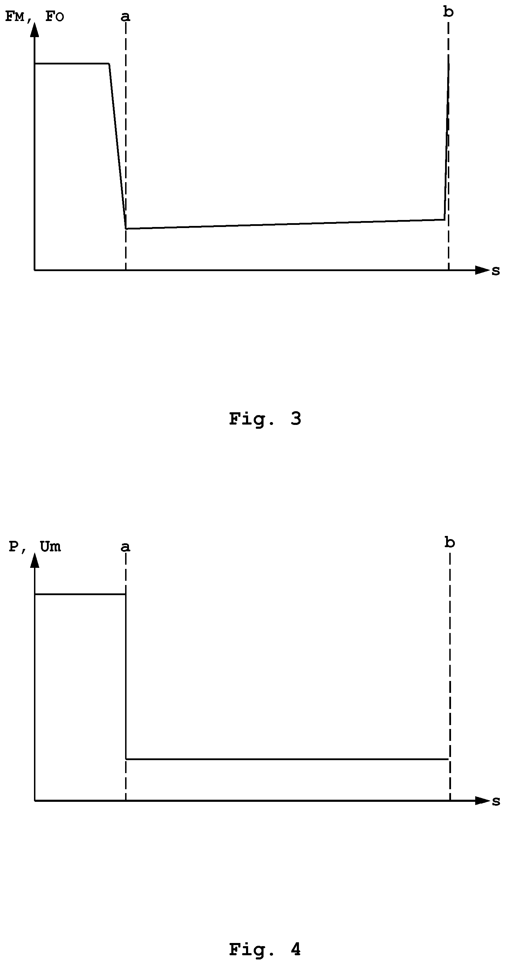

Figur 3 zeigt schematisch einen beispielhaften Verlauf der Kraft F_{M}, die von dem elektromagnetischen Aktuator bereitgestellt wird, bzw. der aufzubringenden Kraft F_{O}, die zum Öffnen des Rücklaufventils 1 aufgebracht werden muss. Wenn sich der Verschlusskörper 10 in seiner Ruhelage befindet, wirkt eine Kraft F_{O} auf diesen, die sich aus der Vorspannkraft F_{V}, der Anpresskraft F_{P} und einer Reibungskraft F_{R} (in Ruhelage: Haftkraft) zusammensetzt. Um das schwimmende Rücklaufventil 1 zu öffnen, muss der elektromagnetische Aktuator eine Kraft F_{M} generieren, die größer als die Kraft F_{O} ist. Sobald der Verschlusskörper 10 von dem Ventilsitz 11 abhebt, beginnt ein Druckausgleich, wobei der Arbeitsdruck p_{A} in die Rücklaufkammer 16b entweichen kann. Ab einer gewissen Verschiebung a, also einem gewissen Öffnungsgrad des Verschlusskörpers 10, fällt der Arbeitsdruck p_{A} rapide unter einen gewissen Grenzdruck P_{G}, wobei die Anpresskraft F_{P} nahezu verschwindet. Danach ist die Kraft F_{O} im Wesentlichen nur noch von der Reibungskraft F_{R} und der Vorspannkraft F_{V} bestimmt. Im in der Figur 3 dargestellten Beispiel steigt die Vorspannkraft F_{V} und somit die Kraft zum Öffnen F_{O} auf den Verschlusskörper 10 bzw. die aufzubringende Kraft F_{M} durch den elektromagnetischen Aktuator 17 mit zunehmender Verschiebung des Verschlusskörpers 10. Dieser Verlauf der Vorspannkraft F_{V} kann durch ein Vorspannelement 12 wie beispielsweise eine Druckfeder hervorgerufen werden. Sobald der Verschlusskörper 10 einen Anschlag b erreicht, steigt die Kraft zum Öffnen F_{O} bzw. die aufzubringende Kraft F_{M} stark an. Der Anschlag kann durch ein Anschlagelement des Hubmagneten 19 bzw. durch dessen Endposition der magnetischen Verschiebung, ein Anschlagelement für den Verschlusskörper 10, ein Aufliegen der einzelnen Wendel eines als Druckfeder ausgestalteten Vorspannelements 12 oder in sonstiger bekannter Weise gebildet werden.

Die Kraft zum Öffnen F_{O} eines erfindungsgemäßen Rücklaufventils 1 kann beispielsweise anfänglich, wenn der Verschlusskörper noch am Ventilsitz anliegt, im Bereich von 2500 N [Newton] bis 3500 N [Newton] liegen. Sobald die Verschiebung a erreicht ist, kann die Kraft, durch fast vollständigen Wegfall der Anpresskraft F_{P}; auf 500 N [Newton] bis 1500 N [Newton] sinken. Im weiteren Verlauf bis zum Erreichen der Verschiebung b beim Anschlag (z. B. Aufliegen am Anschlagelement 19 bzw. Erreichen der Endposition des Hubmagneten) kann die Kraft zum Öffnen F_{O}, aufgrund des Vorspannelements 12 in Form einer Druckfeder, geringfügig mit der Verschiebung ansteigen, sodass zum Offenhalten des Rücklaufventils eine geringfügig höhere Kraft F_{O} als an der Stelle a notwendig ist.

Figur 4 zeigt schematisch einen beispielhaften Verlauf der Leistung P bzw. der mittleren Spannung Uₘ während des Öffnens des Rücklaufventils 1. Sobald die anfänglich - relativ gesehen - hohe Kraft zum Öffnen F_{O} beim zuvor beschriebenen starken Druckabfall beim Erreichen der Verschiebung a abfällt, muss eine deutlich geringere Kraft F_{O} zum weiteren Öffnen von dem elektromagnetischen Aktuator 17 aufgebracht werden. Da die Kraft auf den Anker 17b durch den Elektromagnet 17a über die Leistung gesteuert werden kann, kann ab der Verschiebung a die Leistung P, die dem Elektromagnet 17a zugeführt wird, reduziert werden. Dies geschieht durch Puls-Weiten-Modulation (PWM), wobei eine mittlere Spannung Uₘ, die an dem Elektromagnet 17a anliegt, und damit die Leistung P umso kleiner wird, je kürzer die Pulse der PWM gewählt werden. Somit kann ab der Verschiebung a des Verschlusskörpers 10 der Leistungsverbrauch deutlich gesenkt werden. Zum Offenhalten des Rücklaufventils 1 ist die gleiche geringe Kraft F_{O} und Leistung P bzw. mittlere Spannung U_{M} nötig, wie kurz vor Erreichen des Anschlags bei der Verschiebung b des Verschlusskörpers 10.

Die Verschiebung des Verschlusskörpers 10 bzw. das Erreichen der Verschiebung a kann durch eine Steuerung (nicht dargestellt) erfasst werden. Sobald die Kraft F_{O} rapide sinkt, sinkt auch ein Strom I_{M} durch den Elektromagneten 17a, da die Kraft F_{M} gleichfalls sinkt. Dieser Abfall im Stromverlauf kann von der Steuerung in bekannter Weise erfasst und damit die abgegebene Leistung P durch PWM reduziert werden. Dies reduziert den Energieverbrauch deutlich und verbessert die Laufzeit einer Energiequelle wie beispielsweise einer Batteriezelle.

Ferner kann über den erfassten Strom I_{M} mittels der Steuerung das Erreichen des Anschlags bei der Verschiebung b erkannt werden. Durch das Aufliegen am Anschlagelement 19 bzw. Erreichen der Endposition des Hubmagneten oder das Auftreffen des Verschlusskörpers 10 an dem Anschlag bzw. sobald die Wendeln eines als Druckfeder ausgestalteten Vorspannelements 12 aneinander anliegen, erhöht sich die Kraft F_{O} und damit die durch den elektromagnetischen Aktuator aufgewendete Kraft F_{M} stark. Dabei steigt der Strom I_{M} durch den Elektromagneten 17a ebenfalls an. Dieser Anstieg kann von der Steuerung erfasst werden und somit das Erreichen einer Endstellung bzw. ein vollständiges Öffnen des schwimmenden Ventils 1 erkannt werden.

Über diese Rückkopplung kann ein nicht voll funktionsfähiges schwimmendes Rücklaufventil 1 (z. B. Endstellung nach gewisser Zeit nicht erreicht) erkannt und beispielsweise eine Fehlermeldung ausgegeben werden.

### Bezugszeichenliste

- 100: Rücklaufbaugruppe
- 1: schwimmendes Rücklaufventil
- 2: Ventilkörper
- 3: Ventilbohrung
- 3a-3f: Abstufungen der Ventilbohrung 3
- 4a-4c: Fluidleitungen
- 5a-5c: Anschlüsse
- 6a: erster Ventileinsatz
- 6b: zweiter Ventileinsatz
- 7: Nuten
- 8: Dichtungselemente
- 9a-9b: Öffnungen
- 10: Verschlusskörper
- 11: Ventilsitz
- 12: Vorspannelement
- 13: Stößel
- 13a: erster Kolbenabschnitt
- 13b: zweiter Kolbenabschnitt
- 13c: Spitze
- 14: ortsfester Dichtkörper
- 15: mitgeführter Dichtkörper
- 16a: Ausgleichskammer
- 16b: Rücklaufkammer
- 16c: Druckkammer
- 17: elektromagnetischer Aktuator
- 17a: Elektromagnet
- 17b: Anker
- 18: Halteelemente
- 19: Anschlag des Hubmagneten (Endposition)

## Patentansprüche

1. Rücklaufbaugruppe (100) umfassend
- ein schwimmendes Rücklaufventil (1) umfassend
- einen Ventilkörper (2) einschließlich einer Ventilbohrung (3), in der nacheinander
- eine Druckkammer (16c),
- eine Rücklaufkammer (16b) und
- eine Ausgleichskammer (16a) ausgebildet sind,
- einen Stößel (13), der in der Ventilbohrung (3) angeordnet ist,
- einen Verschlusskörper (10), der die Druckkammer (16c) von der Rücklaufkammer (16b) dicht abtrennt, wenn er an einem Ventilsitz (11) anliegt, wobei in der Druckkammer (16c) und in der Ausgleichskammer (16a) ein Arbeitsdruck (p_{A}) anliegt und der Arbeitsdruck (p_{A}) in der Druckkammer (16c) den Verschlusskörper (10) gegen den Ventilsitz (11) und in der Ausgleichskammer (16a) den Stößel (13) in entgegengesetzter Richtung drückt,
- ein Vorspannelement (12), das den Verschlusskörper (10) gegen den Ventilsitz (11) vorspannt,
einen Aktuator (17), der den Stößel (13) in eine Richtung auf den Verschlusskörper (10) zu verschieben kann, wobei der Aktuator (17) über den Stößel (13) den Verschlusskörper (10) gegen eine Vorspannung des Vorspannelements (12) von dem Ventilsitz (11) weg verschiebt, sodass die Druckkammer (16c) nicht von der Rücklaufkammer (16b) getrennt ist und der Arbeitsdruck (p_{A}) aus der Druckkammer (16c) in die Rücklaufkammer (16b) entweichen kann, wobei der Aktuator (17) ein elektromagnetischer Aktuator (17) einschließlich eines Elektromagneten (17a) und eines Ankers (17b) ist, wobei der Anker (17b) von dem Elektromagneten (17a) bewegt wird und über den Stößel (13) den Verschlusskörper (10) gegen die Vorspannung des Vorspannelements (12) von dem Ventilsitz (11) weg verschiebt, wenn dem Elektromagneten (17a) eine ausreichende elektrische Leistung zum Öffnen (P_{O}) bereitgestellt wird
**dadurch gekennzeichnet, dass**
der Anker (17b) an einer Stirnseite eines ersten Kolbenabschnitts (13a) des Stößels (13) anliegt und die Ausgleichskammer (16a) in einem Bereich einer Abstufung (3d) der Ventilbohrung (3) von einer Innenfläche eines ersten Ventileinsatzes (6a), einer Innenfläche eines zweiten Ventileinsatzes (6b), einer Außenfläche eines zweiten Kolbenabschnitts (13b) des Stößels (13), einer unteren Stirnfläche des ersten Kolbenabschnitts (13a) und einer Stirnfläche einer Spitze (13c) des Stößels (13) oder einem mitgeführten Dichtkörper (15) ausgebildet ist.

2. Rücklaufbaugruppe (100) nach Anspruch 1, ferner umfassend
- eine Energiequelle, die eingerichtet ist dem Elektromagnet (17a) eine Leistung (P) bereitzustellen, und
- eine Steuerung, die eingerichtet ist die Leistung(P) von der Leistung zum Öffnen (P_{O}) auf eine Leistung zum weiteren Öffnen oder Offenhalten (P_{H}) zu reduzieren, sobald der Arbeitsdruck (p_{A}) in der Druckkammer (16c) unter einen Grenzdruck (p_{G}) abgefallen ist.

3. Rücklaufbaugruppe (100) nach Anspruch 2, wobei die Steuerung eingerichtet ist die Leistung (P) durch Puls-Weiten-Modulation (PWM) einzustellen.

4. Rücklaufbaugruppe (100) nach einem der Ansprüche 2 bis 3, wobei die Steuerung eingerichtet ist, einen Strom (I_{M}) durch den Elektromagnet (17a) zu erfassen und als Regelgröße für die Leistung (P) zu verwenden.

5. Rücklaufbaugruppe (100) nach einem der Ansprüche 2 bis 4, wobei die Steuerung eingerichtet ist, den erfassten Strom (I_{M}) für eine Erkennung eines Anschlags des Verschlusskörpers (10) zu verwenden.

6. Rücklaufbaugruppe (100) nach einem der vorherigen Ansprüche, wobei der elektromagnetische Aktuator (17) derart eingerichtet ist, dass der Anker (17b) manuell bewegt werden kann.

7. Rücklaufbaugruppe (100) nach einem der vorherigen Ansprüche, wobei der Stößel (13) derart geformt ist, dass auf den Stößel (13) durch den Arbeitsdruck (p_{A}) in der Ausgleichskammer (16a) eine Kraft (F_{A}) wirkt, die kleiner oder gleich einer Kraft (F_{P}) ist, die durch den Arbeitsdruck (p_{A}) in der Druckkammer (16c) auf den Verschlusskörper wirkt, und dieser entgegengesetzt gerichtet ist.

8. Rücklaufbaugruppe (100) nach einem der vorherigen Ansprüche, wobei die Rücklaufbaugruppe in einem Temperaturbereich von - 30°C [Grad Celsius] bis +100°C [Grad Celsius] einsetzbar ist.

9. Rücklaufbaugruppe (100) nach einem der vorherigen Ansprüche, wobei die Spitze (13c) im Wesentlichen ein Rotationshyperboloidstumpf ist.

10. Hydraulisches Werkzeug umfassend eine Rücklaufbaugruppe (100) nach Anspruch 1, wobei ein Arbeitszylinder des Werkzeugs über eine dritte Fluidleitung (4c) mit der Druckkammer (16c) und über eine erste Fluidleitung (4a) mit der Ausgleichskammer (16a) verbunden ist und wobei ein Tank des Werkzeugs über eine zweite Fluidleitung (4b) mit der Rücklaufkammer (16b) verbunden ist.

11. Hydraulisches Werkzeug nach Anspruch 10 wobei die Rücklaufbaugruppe (100) nach einem der Ansprüche 2 bis 9 ausgestaltet ist.

## Claims

1. Return assembly (100) comprising
- a floating return valve (1) comprising
- a valve body (2) including a valve bore (3) in which, one after the other,
- a pressure chamber (16c),
- a return chamber (16b) and
- a compensation chamber (16a) are formed,
- a tappet (13) which is arranged in the valve bore (3),
- a closure body (10) which separates the pressure chamber (16c) from the return chamber (16b) in a sealed manner when it bears against a valve seat (11), wherein a working pressure (p_{A}) prevails in the pressure chamber (16c) and in the compensation chamber (16a), and the working pressure (p_{A}) in the pressure chamber (16c) pushes the closure body (10) against the valve seat (11) and in the compensation chamber (16a) pushes the tappet (13) in the opposite direction,
- a preload element (12) which preloads the closure body (10) against the valve seat (11),
- an actuator (17) which is able to displace the tappet (13) in a direction towards the closure body (10), wherein, via the tappet (13), the actuator (17) displaces the closure body (10) away from the valve seat (11) counter to a preload of the preload element (12), with the result that the pressure chamber (16c) is not separated from the return chamber (16b) and the working pressure (p_{A}) can escape from the pressure chamber (16c) into the return chamber (16b), wherein the actuator (17) is an electromagnetic actuator (17) including an electromagnet (17a) and an armature (17b), wherein the armature (17b) is moved by the electromagnet (17a) and, via the tappet (13), displaces the closure body (10) away from the valve seat (11) counter to the preload of the preload element (12) when a sufficient electrical power for opening (P_{O}) is provided to the electromagnet (17a),
**characterized in that**
the armature (17b) bears against an end side of a first piston portion (13a) of the tappet (13), and the compensation chamber (16a) is, in a region of a step (3d) of the valve bore (3), formed by an inner surface of a first valve insert (6a), an inner surface of a second valve insert (6b), an outer surface of a second piston portion (13b) of the tappet (13), a lower end surface of the first piston portion (13a), and an end surface of a tip (13c) of the tappet (13) or a sealing body (15) which is carried along.

2. Return assembly (100) according to Claim 1, also comprising
- an energy source which is configured to provide a power (P) to the electromagnetic (17a), and
- a controller which is configured to reduce the power (P) from the power for opening (P_{O}) to a power for further opening or keeping open (P_{H}) as soon as the working pressure (p_{A}) in the pressure chamber (16c) has fallen below a limit pressure (p_{G}).

3. Return assembly (100) according to Claim 2, wherein the controller is configured to set the power (P) by way of pulse width modulation (PWM).

4. Return assembly (100) according to either of Claims 2 and 3, wherein the controller is configured to detect a current (I_{M}) passing through the electromagnet (17a) and to use said current as a regulating variable for the power (P).

5. Return assembly (100) according to one of Claims 2 to 4, wherein the controller is configured to use the detected current (I_{M}) for identifying an abutment of the closure body (10).

6. Return assembly (100) according to one of the preceding claims, wherein the electromagnetic actuator (17) is configured such that the armature (17b) is able to be moved manually.

7. Return assembly (100) according to one of the preceding claims, wherein the tappet (13) is formed such that a force (F_{A}) acts on the tappet (13) by way of the working pressure (p_{A}) in the compensation chamber (16a), which force is less than or equal to a force (F_{P}), which acts on the closure body by way of the working pressure (p_{A}) in the pressure chamber (16c), and is oppositely directed thereto.

8. Return assembly (100) according to one of the preceding claims, wherein the return assembly is able to be used in a temperature range of -30°C [degrees Celsius] to +100°C [degrees Celsius].

9. Return assembly (100) according to one of the preceding claims, wherein the tip (13c) is substantially a truncated hyperboloid of revolution.

10. Hydraulic tool comprising a return assembly (100) according to Claim 1, wherein a working cylinder of the tool is connected via a third fluid line (4c) to the pressure chamber (16c) and via a first fluid line (4a) to the compensation chamber (16a), and wherein a tank of the tool is connected via a second fluid line (4b) to the return assembly (16b).

11. Hydraulic tool according to Claim 10, wherein the return assembly (100) is designed according to one of Claims 2 to 9.

## Revendications

1. Module retour (100) comprenant
- un clapet antiretour flottant (1), comprenant
- un corps de clapet (2) incluant un alésage de clapet (3) dans lequel sont réalisées, l'une derrière l'autre
- une chambre de pression (16c),
- une chambre de retour (16b) et
- une chambre de compensation (16a),
- un poussoir (13) qui est disposé dans l'alésage de clapet (3),
- un corps de fermeture (10) qui sépare hermétiquement la chambre de pression (16c) de la chambre de retour (16b), lorsque qu'il s'applique contre un siège de clapet (11), une pression de travail (p_{A}) s'appliquant dans la chambre de pression (16c) et dans la chambre de compensation (16a) et la pression de travail (p_{A}) dans la chambre de pression (16c) pressant le corps de fermeture (10) contre le siège de clapet (11) et dans la chambre de compensation (16a) pressant le poussoir (13) dans la direction opposée,
- un élément de précontrainte (12), qui précontraint le corps de fermeture (10) contre le siège de clapet (11),
un actionneur (17) qui peut déplacer le poussoir (13) dans une direction vers le corps de fermeture (10), l'actionneur (17) déplaçant, par le biais du poussoir (13), le corps de fermeture (10) à l'encontre d'une précontrainte de l'élément de précontrainte (12) à l'écart du siège de clapet (11), de sorte que la chambre de pression (16c) ne soit pas séparée de la chambre de retour (16b) et que la pression de travail (p_{A}) puisse s'échapper de la chambre de pression (16c) dans la chambre de retour (16b), l'actionneur (17) étant un actionneur électromagnétique (17) incluant un électroaimant (17a) et un induit (17b), l'induit (17b) étant déplacé par l'électroaimant (17a) et déplaçant, par le biais du poussoir (13), le corps de fermeture (10) à l'encontre de la précontrainte de l'élément de précontrainte (12) à l'écart du siège de clapet (11) lorsque l'électroaimant (17a) reçoit une puissance électrique suffisante pour l'ouverture (p_{O}),
**caractérisé en ce que**
l'induit (17b) s'applique contre un côté frontal d'une première portion de piston (13a) du poussoir (13) et la chambre de compensation (16a), dans une région d'un épaulement (3d) de l'alésage de clapet (3), est réalisée par une surface interne d'un premier insert de clapet (6a), une surface interne d'un deuxième insert de clapet (6b), une surface externe d'une deuxième portion de piston (13b) du poussoir (13), une surface frontale inférieure de la première portion de piston (13a) et une surface frontale d'une pointe (13c) du poussoir (13) ou un corps d'étanchéité entraîné (15).

2. Module retour (100) selon la revendication 1, comprenant en outre
- une source d'énergie qui est prévue pour fournir une puissance (P) à l'électroaimant (17a), et
- une commande qui est prévue pour réduire la puissance (P) de la puissance d'ouverture (P_{O}) à une puissance pour l'ouverture supplémentaire ou pour le maintien ouvert (P_{H}), dès que la pression de travail (p_{A}) dans la chambre de pression (16c) chute en dessous d'une pression limite (p_{G}).

3. Module retour (100) selon la revendication 2, dans lequel la commande est prévue pour ajuster la puissance (P) par modulation de largeur d'impulsions (PWM).

4. Module retour (100) selon l'une quelconque des revendications 2 et 3, dans lequel la commande est prévue pour détecter un courant (I_{M}) à travers l'électroaimant (17a) et pour l'utiliser en tant que grandeur de réglage pour la puissance (P).

5. Module retour (100) selon l'une quelconque des revendications 2 à 4, dans lequel la commande est prévue pour utiliser le courant détecté (I_{M}) pour une reconnaissance d'une butée du corps de fermeture (10).

6. Module retour (100) selon l'une quelconque des revendications précédentes, dans lequel l'actionneur électromagnétique (17) est prévu de telle sorte que l'induit (17b) puisse être déplacé manuellement.

7. Module retour (100) selon l'une quelconque des revendications précédentes, dans lequel le poussoir (13) est formé de telle sorte qu'une force (F_{A}) agisse sur le poussoir (13) par la pression de travail (p_{A}) dans la chambre de compensation (16a), laquelle force est inférieure ou égale à une force (F_{P}) qui agit par la pression de travail (p_{A}) dans la chambre de pression (16c) sur le corps de fermeture et qui est orientée à l'opposé de celle-ci.

8. Module retour (100) selon l'une quelconque des revendications précédentes, dans lequel le module retour peut être utilisé dans une plage de température de -30°C [degrés Celsius] à +100°C [degrés Celsius].

9. Module retour (100) selon l'une quelconque des revendications précédentes, dans lequel la pointe (13c) est sensiblement un bout hyperboloïde de révolution.

10. Outil hydraulique comprenant un module retour (100) selon la revendication 1, un cylindre de travail de l'outil étant raccordé par le biais d'une troisième conduite de fluide (4c) à la chambre de pression (16c) et par le biais d'une première conduite de fluide (4a) à la chambre de compensation (16a) et un réservoir de l'outil étant raccordé par le biais d'une deuxième conduite de fluide (4b) à la chambre de retour (16b).

11. Outil hydraulique selon la revendication 10, dans lequel le module retour (100) est configuré selon l'une quelconque des revendications 2 à 9.
